# FASCICULE DE BREVET EUROPEEN

(11) **EP 1 450 932 B1**
(45) Date de publication et mention de la délivrance du brevet: **23.05.2018**
(21) Numéro de dépôt: 02803448.6
(22) Date de dépôt: 20.11.2002
(51) Int. Cl.: C01B 3/50, C01B 3/56, C01B 3/58, F25J 3/02, B01D 53/053

(54) **PROCEDE POUR LA MISE EN OEUVRE D'UNE INSTALLATION DE PRODUCTION D'HYDROGENE**
VERFAHREN ZUR VERWENDUNG EINER ANLAGE ZUR WASSERSTOFFHERSTELLUNG
METHODS FOR USING AN INSTALLATION FOR PRODUCING HYDROGEN

(30) Priorité: 22.11.2001 FR 0115117
(43) Date de publication de la demande: 01.09.2004
(73) Titulaire: L'AIR LIQUIDE, Société Anonyme pour l'Etude et l'Exploitation des Procédés Georges Claude, 75007 Paris (FR)
(72) Inventeur: ENGLER, Yves, F-78400 Chatou (FR); MICHALIK, Edie, F-94440 Santeny (FR); COBBAUT, Jan, B-9470 Denderleeuw (BE); GONFALONE, Olivier, B-2514 Gt La Haye (NL); SIMONS, Dirck, B-2240 Zandhoven (BE)
(74) Mandataire: Conan, Philippe Claude
(86) Numéro de dépôt international: PCT/FR2002/003971
(87) Numéro de publication internationale: WO 2003/043718

(56) Documents cités:
- EP-A- 0 266 051
- EP-A- 1 097 902
- FR-A- 2 788 051
- US-A- 4 553 981
- US-A- 5 980 857

## Description

L'invention concerne un procédé de production d'hydrogène.

Dans une installation de production d'hydrogène, l'unité de purification produit un gaz résiduaire qui est récupéré pour être brûlé dans les brûleurs dont l'alimentation est interrompue lors d'un arrêt intempestif de cette unité de purification, ce qui est désavantageux.

En particulier, cette installation peut être munie d'une unité de reformage du méthane, cette unité de reformage étant chauffée et pourvue à cet effet des brûleurs dans lesquels est brûlé le gaz résiduaire. Dans une telle configuration, un arrêt accidentel de l'unité de purification se traduit souvent par celui de l'unité de reformage. Cela constitue un inconvénient d'autant plus préjudiciable que la durée de redémarrage de cette unité de reformage se compte en dizaine d'heures toutes très coûteuses. En outre, même dans les cas où on réussit à maintenir l'unité de reformage en fonctionnement, celle-ci ne peut retrouver un régime stabilisé qu'après plusieurs heures.

FR2 788 051 divulgue un procédé et une installation pour la production de monoxyde de carbone et d'un mélange H2/CO à partir de gaz de synthèse obtenu par reformage à la vapeur de gaz naturel et traité ensuite dans une unité PSA. Il divulgue aussi le recyclage d'une partie de l'offgas du PSA en tant que fuel selon les besoins du reformage, ainsi que le recyclage de la partie la partie excédentaire de l'offgas du PSA à l'alimentation du PSA.

EP 1 097 902 divulgue un procédé de production d'hydrogène à partir d'un reformage de gaz naturel et production d'hydrogène haute pureté par PSA, l'offgas du PSA étant recyclé en tant que fuel au reformage.

US 4 553 981 décrit le recyclage d'offgas de sorte à augmenter le taux de production de l'installation - notamment en amont d'étape de shift.

Par conséquent, de nombreux efforts ont été déployés pour améliorer la fiabilité des unités de purification employées. Cependant, il arrive encore que ces unités de purification s'arrêtent accidentellement.

L'invention, qui vise notamment à remédier à l'inconvénient précédemment mentionné, a donc pour but d'améliorer le fonctionnement et/ou la rentabilité d'une installation du type précité.

A cet effet, elle a pour objet un procédé tel que défini à la revendication 1.

Selon d'autres caractéristiques avantageuses de ce procédé, il comporte les étapes dans lesquelles :
- on ferme progressivement la deuxième vanne de réglage de débit,
- on mesure de manière continue le débit du gaz résiduaire alimentant les brûleurs,
- on calcule en temps réel et de manière continue le débit théorique de gaz de remplacement devant être brûlé pour compenser la baisse du débit du gaz résiduaire alimentant les brûleurs, et
- on régule le débit effectif du gaz de remplacement alimentant les brûleurs autour dudit débit théorique calculé, en agissant sur le degré d'ouverture de la première vanne de réglage de débit.

L'invention sera bien comprise à la lecture de la description qui va suivre, donnée uniquement à titre d'exemple et faite en se référant aux dessins annexés, sur lesquels :
- la figure 1 est une vue schématique et simplifiée d'une installation conforme à l'invention et prévue pour produire de l'hydrogène à partir d'un gaz contenant du méthane ; et
- la figure 2 est une vue schématique et simplifiée d'une installation conforme à l'invention et prévue pour produire de l'hydrogène et du monoxyde de carbone à partir d'un gaz contenant du méthane.

Sur ces figures, les traits qui symbolisent des canalisations sont orientés pour indiquer les sens de circulation des fluides à l'intérieur de chacune des deux installations représentées. De la même manière, les pointillés qui symbolisent des lignes pour l'acheminement d'informations de contrôle et de commande sont orientés pour indiquer dans quel sens circulent ces informations.

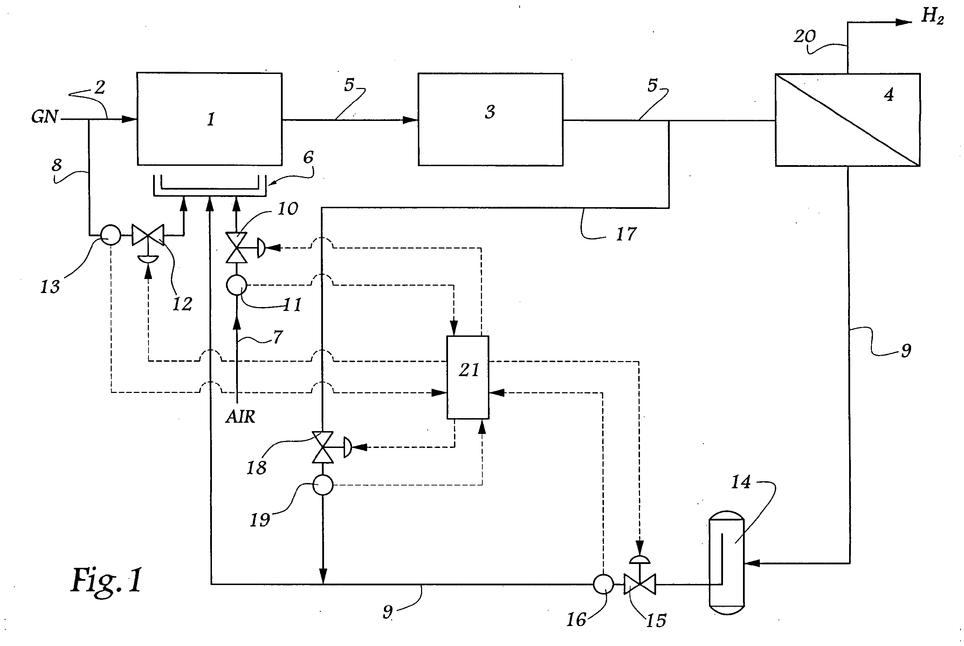

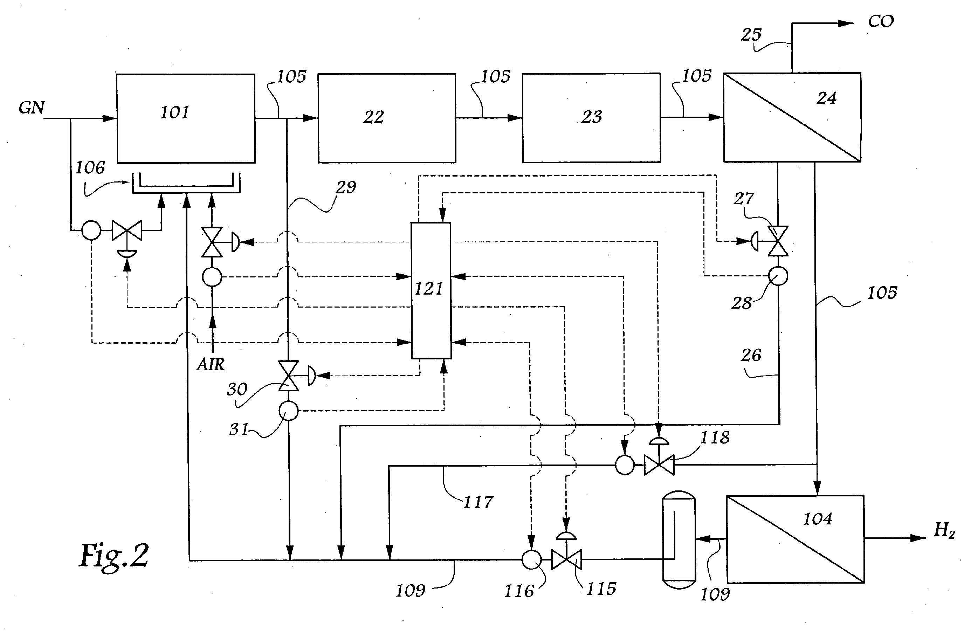

Par ailleurs, les installations représentées sont organisées selon un schéma de base classique et connu. Sur les figures 1 et 2, ce schéma de base, qui est complexe dans la réalité, a donc pu être simplifié en y omettant certains éléments largement connus en soi, dans un souci de clarté uniquement.

Une installation conforme à l'invention est représentée à la figure 1. Elle est destinée à produire de l'hydrogène à partir d'un gaz contenant du méthane, tel que le gaz naturel. Elle comporte une unité 1 de reformage du méthane à la vapeur d'eau, destinée à être alimentée en gaz naturel GN sous pression par une canalisation 2 et à produire en sortie un gaz de synthèse riche en hydrogène, un réacteur 3 de conversion du monoxyde de carbone en dioxyde de carbone, placé en aval de l'unité de reformage 1, et une unité de purification 4 placée en aval du réacteur de conversion 3 et destinée à extraire l'hydrogène présent dans le gaz de synthèse et à produire un gaz résiduaire. Une canalisation 5 pour l'acheminement du gaz de synthèse à haute pression relie la sortie de l'unité de reformage 1 à l'entrée du réacteur de conversion 3 et la sortie de ce dernier à l'unité de purification 4.

Pour son chauffage, l'unité de reformage 1 comporte des brûleurs 6 munis d'une prise d'air atmosphérique 7. Ces brûleurs 7 sont destinés à être alimentés par, d'une part, du gaz naturel acheminé au moyen d'une canalisation 8 piquée sur la canalisation 2 et, d'autre part, du gaz résiduaire, à basse pression, produit par l'unité de purification 4. Ce gaz résiduaire est acheminé par une canalisation 9 depuis l'unité de purification 4 jusqu'aux brûleurs 6.

Le débit d'air dans la prise d'air 7 est destiné à être réglé par une vanne 10 et mesuré par un débitmètre 11. La prise d'air peut être équipée d'une soufflante, auquel cas le débit d'air mesuré par le débitmètre 11 peut être régulé en pilotant cette soufflante.

La canalisation 8 est pour sa part pourvue d'une vanne 12 et d'un débitmètre 13, respectivement prévus pour régler et pour mesurer le débit du gaz naturel alimentant les brûleurs 6.

L'unité de purification 4 étant du type à adsorption sélective par variation cyclique de pression, une capacité tampon 14, destinée à amortir les variations de débit du gaz résiduaire sortant de cette unité de purification 4, est disposée dans la canalisation 9 pour être traversée par ce gaz résiduaire en amont des brûleurs 6. Une vanne 15 de réglage du débit sortant de la capacité tampon 14 et un débitmètre 16 de mesure de ce débit équipent également la canalisation 9.

Une canalisation 17 relie les canalisations 5 et 9 respectivement destinées à l'acheminement du gaz de synthèse et du gaz résiduaire. Plus précisément, cette canalisation 17 se raccorde, sur la canalisation 5, entre le réacteur de conversion 3 et l'unité de purification 4 et, sur la canalisation 9, en aval de la vanne 15 et du débitmètre 16. Elle est munie d'une vanne 18 de réglage du débit du gaz de synthèse qu'elle achemine, ainsi que d'un débitmètre 19 destiné à mesurer ce débit.

L'unité de purification 4 comporte une sortie pour l'hydrogène produit, sur laquelle est raccordée une canalisation 20 d'évacuation de celui-ci.

Une unité 21 de contrôle, de calcul et de commande des débit de l'air, de gaz naturel, du gaz résiduaire et du gaz de synthèse qui alimentent les brûleurs 6 est destiné à, d'une part, recevoir de chacun des débitmètres 11, 13, 16 et 19 une mesure de débit et, d'autre part, calculer et commander le degré d'ouverture de chacune des vannes 10, 12, 15 et 18.

En fonctionnement stabilisé, la vanne 18 est fermée, de sorte que les brûleurs 6 ne brûlent que du gaz résiduaire et du gaz naturel d'appoint. L'installation représentée à la figure 1 a alors un fonctionnement qui est connu en soi.

En cas d'arrêt brutal et imprévu de l'unité de purification 4, celle-ci est automatiquement isolée du reste de l'installation, et la capacité tampon 14 n'est plus alimentée en gaz résiduaire. Aussitôt, l'unité de contrôle, de calcul et de commande 21 commande la fermeture progressive, selon une rampe prédéterminée, de la vanne 15. Parallèlement, elle calcule en temps réel et de manière continue le débit théorique de gaz de synthèse qui doit être brûlé pour compenser la baisse du débit du gaz résiduaire alimentant les brûleurs 6, et elle ouvre et commande la vanne 18 de manière à réguler, autour du débit théorique qu'elle a calculé, le débit effectif du gaz de synthèse alimentant les brûleurs 6. Le calcul considéré prend en compte les pouvoirs calorifiques du gaz résiduaire et du gaz de synthèse.

En variante, le degré d'ouverture de la vanne 18 n'est pas calculé en fonction de la mesure effectuée par le débitmètre 16, mais il est la conséquence directe de la régulation d'une température liée au fonctionnement des brûleurs 6, comme la température des gaz de combustion ou celle de la réaction de reformage.

La substitution du gaz résiduaire par une partie du gaz de synthèse ne peut s'effectuer instantanément du fait des temps de réponse des matériels, en particulier des vannes qui interviennent alors. Aussi, la capacité tampon 14 rend possible la phase transitoire de substitution progressive qui vient d'être décrite. A l'issue de cette dernière, l'unité de reformage 1 a conservé un état stable de fonctionnement, alors que ses brûleurs 6 ne sont plus alimentés que par du gaz naturel et du gaz de synthèse, la vanne 15 étant fermée.

L'unité de purification 4 peut dès lors être rapidement redémarrée. On a ainsi économisé le temps, qui se compte en dizaine d'heures, nécessaire au redémarrage de l'unité de reformage 1.

On va maintenant s'attacher à décrire une procédure avantageuse de démarrage de l'installation représentée à la figure 1. Cette procédure comporte une première et une deuxième étapes. Dans la première étape, on démarre progressivement l'unité de reformage 1 en alimentant les brûleurs 6 avec au moins une partie du gaz de synthèse produit. Le débit de cette partie, qui s'écoule dans la canalisation 17, est déterminé par le degré d'ouverture de la vanne 18, qui est commandé par l'unité 21.

Lors de la deuxième étape du démarrage, on met en route l'unité de purification 4 en l'alimentant avec un débit croissant de gaz de synthèse. Cette unité de purification 4 produit alors de l'hydrogène et du gaz résiduaire qui est progressivement substitué au gaz de synthèse alimentant les brûleurs 6.

La combustion de gaz de synthèse dans les brûleurs 6 permet d'économiser le combustible qui, sans cela, devrait être consommé lors du démarrage de l'installation.

On va maintenant décrire une procédure qui peut avantageusement être mise en oeuvre lorsque l'on souhaite réduire rapidement la quantité d'hydrogène produite.

L'unité de reformage 1 et l'unité de purification 4 présentent toutes deux une certaine inertie, si bien que la quantité d'hydrogène produite ne peut pas être réduite instantanément. L'unité de reformage 1 évolue plus lentement que l'unité de purification. Aussi, détermine-telle, dans la technique connue, la vitesse avec laquelle est réduite la quantité d'hydrogène produite. Si cette vitesse est inférieure à la vitesse souhaitée, l'hydrogène excédentaire est brûlé dans une torche.

Lorsque, dans l'installation représentée à la figure 1, on choisit de ralentir plus rapidement l'unité de purification 4 que l'unité de reformage 1 ne peut l'être, la part du gaz de synthèse qui n'alimente plus l'unité de purification 4 peut être prélevée au moyen de la canalisation 17, et brûlée dans les brûleurs 6. On réduit alors le débit de gaz naturel alimentant ces brûleurs 6, ce qui se traduit par une économie.

En variante, l'emplacement de chacun des deux raccordements de la canalisation 17 respectivement sur les canalisations 5 et 9 peut être déplacé. Si le raccordement de cette canalisation 17 sur la canalisation 9 est disposée en amont de la capacité-tampon 14, on peut prévoir que lors des procédures de transition qui viennent d'être exposées, la vanne 18 soit commandée en vue de réguler la pression de la capacité-tampon 14 , la vanne 15 étant alors pilotée par la régulation du débit dans la canalisation 9 à une valeur de consigne. A cet effet, une correction est appliquée à la mesure effectuée par le débitmètre 16, afin de prendre en compte le changement de composition du gaz s'écoulant dans cette canalisation 9.

La figure 2 représente une installation pour produire de l'hydrogène et du monoxyde de carbone à partir du gaz naturel. Cette installation est conçue selon un schéma globalement semblable à celui de l'installation représentée à la figure 1. Aussi, on ne décrira ci-après que ce qui la distingue de cette installation représentée à la figure 1, dont les éléments sont repérés par des références qui seront augmentées de 100 pour désigner, dans ce qui suit, les éléments analogues de l'installation illustrée à la figure 2.

Le réacteur 3 de conversion du monoxyde de carbone en hydrogène est remplacé par un dispositif 22 d'épuration en dioxyde de carbone, un dispositif de dessiccation 23, placé en aval du dispositif d'épuration 22, et une unité de séparation formée par une boîte froide 24 de séparation par voie cryogénique. Cette boîte froide 24 est disposée en aval du dispositif de dessiccation 23. Elle est prévue pour extraire le monoxyde de carbone présent dans le gaz de synthèse qui la traverse.

Outre le monoxyde de carbone, pour l'évacuation duquel une canalisation 25 est raccordée sur la boîte froide 24, cette dernière est destinée à produire un gaz résiduaire. Une canalisation 26 pour le transport de ce gaz résiduaire relie la boîte froide 24 à la canalisation 109, sur laquelle elle se raccorde en aval de la vanne 115 et du débitmètre 116. La canalisation 26 est munie d'une vanne de réglage 27 et d'un débitmètre 28. La vanne 27 est destinée à être commandée par une unité de contrôle, de calcul et de commande 121, en fonction de la mesure effectuée par le débitmètre 28.

La canalisation 117, qui relie les canalisations 109 et 105, se raccorde, sur cette dernière, entre la boîte froide 24 et l'unité de purification 104.

Une autre canalisation, référencée 29, relie également la canalisation 105 à la canalisation 109, sur laquelle elle aussi se raccorde en aval de la vanne 115 et du débitmètre 116. Son raccordement sur la canalisation 105 la distingue toutefois de la canalisation 117 dans la mesure où il est disposé en amont de la boîte froide 24, plus précisément entre l'unité de reformage 101 et le dispositif d'épuration en dioxyde de carbone 22. La canalisation 29 est pourvue d'une vanne de réglage de débit 30 et d'un débitmètre 31, tous deux reliés à l'unité de contrôle, de calcul et de commande 121.

En fonctionnement stabilisé, les vannes 118 et 30 sont fermées et l'installation a un fonctionnement classique, qui est connu en soi.

Lors d'un arrêt soudain et imprévu de l'unité de purification 104, la vanne 115 se ferme progressivement, tandis que la vanne 118, pilotée par l'unité 121, est ouverte en appliquant une procédure semblable à la procédure, précédemment décrite, qui est mise en oeuvre lorsque l'unité de purification 4 de l'installation représentée à la figure 1 s'arrête subitement. A l'issue de cette procédure, la partie de l'installation qui va de l'unité de reformage 101 à la boîte froide 24 a conservé un régime de fonctionnement sensiblement stabilisé, ce qui présente un double avantage. Premièrement, on évite le redémarrage lent et coûteux de l'unité de reformage 101. Deuxièmement, la production de monoxyde de carbone peut être poursuivie malgré l'arrêt de l'unité de purification 104.

Lorsque l'arrêt intempestif concerne la boîte froide 24, ce qui se traduit par l'arrêt en cascade de l'unité de purification 104, on applique une procédure semblable à la procédure, précédemment exposée, qui est mise en oeuvre lors de l'arrêt de l'unité de purification 4 de l'installation représentée à la figure 1. La vanne 30, pilotée par l'unité 121, joue alors un rôle analogue à celui de la vanne 18, et elle est ouverte de manière à compenser la fermeture progressive de la vanne 115. Ainsi, l'unité de reformage 101 est maintenue en fonctionnement.

En outre, les deux procédures, présentées précédemment, qui sont destinées à être appliquées l'une lors du démarrage de l'installation représentée à la figure 1 et l'autre lors d'une réduction de la quantité d'hydrogène produite par cette installation, peuvent avantageusement être également mise en oeuvre dans l'installation représentée à la figure 2, leur transposition par un spécialiste de la technique considérée ici ne présentant aucune difficulté particulière.

En variante, l'une des canalisations 29 et 117 peut, bien entendu, être supprimée.

En outre, les variantes envisagées pour l'installation représentée à la figure 1 peuvent être adaptées à l'installation représentée à la figure 2.

Par ailleurs, les unités 1 et 101 peuvent être de différentes sortes. Elles peuvent par exemple être configurées pour la mise en oeuvre soit d'un reformage du méthane à la vapeur du type simple (SMR), soit d'un reformage du méthane à la vapeur du type convectif (TCR).

En outre, d'autres sortes de générateurs de gaz de synthèse que les unités 1 et 101 de reformage du méthane à la vapeur peuvent être utilisées aux fins de produire le gaz de synthèse riche en hydrogène. Par exemple, il peut s'agir d'un réacteur chimique, conçu pour la mise en oeuvre d'une réaction catalytique ou non.

Egalement, les unités de purification 4 et 104 peuvent être conçues pour la mise en oeuvre de différentes sortes de procédés. Par exemple, elles peuvent être du type à adsorption sélective par variation cyclique de pression, ou bien être formées d'une boîte froide de séparation par voie cryogénique, ou encore utiliser le principe du lavage aux amines.

De même, la boîte froide 24 peut être remplacée par une unité de séparation d'un autre type, prévue pour extraire le monoxyde de carbone présent dans le gaz de synthèse autrement que par voie cryogénique. Par exemple, elle peut être remplacée par un dispositif à membrane sélective.

De plus, notamment lorsque le gaz de synthèse est produit au moyen d'un réacteur chimique, les brûleurs 6 peuvent équiper non pas l'unité de reformage 1 ou 101, le cas échéant remplacée par ce réacteur chimique, mais un autre dispositif tel qu'un four ou une chaudière de production de vapeur, cet autre dispositif pouvant par exemple faire partie d'une ligne de production autre que celle sur laquelle se trouve l'unité de purification 4 ou 104.

La canalisation 117, qui relie les canalisations 109 et 105, se raccorde, sur cette dernière, entre la boîte froide 24 et l'unité de purification 104.

Une autre canalisation, référencée 29, relie également la canalisation 105 à la canalisation 109, sur laquelle elle aussi se raccorde en aval de la vanne 115 et du débitmètre 116. Son raccordement sur la canalisation 105 la distingue toutefois de la canalisation 117 dans la mesure où il est disposé en amont de la boîte froide 24, plus précisément entre l'unité de reformage 101 et le dispositif d'épuration en dioxyde de carbone 22. La canalisation 29 est pourvue d'une vanne de réglage de débit 30 et d'un débitmètre 31, tous deux reliés à l'unité de contrôlé, de calcul et de commande 121.

En fonctionnement stabilisé, les vannes 118 et 30 sont fermées et l'installation a un fonctionnement classique, qui est connu en soi.

Lors d'un arrêt soudain et imprévu de l'unité de purification 104, la vanne 115 se ferme progressivement, tandis que la vanne 118, pilotée par l'unité 121, est ouverte en appliquant une procédure semblable à la procédure, précédemment décrite, qui est mise en oeuvre lorsque l'unité de purification 4 de l'installation représentée à la figure 1 s'arrête subitement. A l'issue de cette procédure, la partie de l'installation qui va de l'unité de reformage 101 à la boîte froide 24 a conservé un régime de fonctionnement sensiblement stabilisé, ce qui présente un double avantage. Premièrement, on évite le redémarrage lent et coûteux de l'unité de reformage 101. Deuxièmement, la production de monoxyde de carbone peut être poursuivie malgré l'arrêt de l'unité de purification 104.

Lorsque l'arrêt intempestif concerne la boîte froide 24, ce qui se traduit par l'arrêt en cascade de l'unité de purification 104, on applique une procédure semblable à la procédure, précédemment exposée, qui est mise en oeuvre lors de l'arrêt de l'unité de purification 4 de l'installation représentée à la figure 1. La vanne 30, pilotée par l'unité 121, joue alors un rôle analogue à celui de la vanne 18, et elle est ouverte de manière à compenser la fermeture progressive de la vanne 115. Ainsi, l'unité de reformage 101 est maintenue en fonctionnement.

En outre, les deux procédures, présentées précédemment, qui sont destinées à être appliquées l'une lors du démarrage de l'installation représentée à la figure 1 et l'autre lors d'une réduction de la quantité d'hydrogène produite par cette installation, peuvent avantageusement être également mise en oeuvre dans l'installation représentée à la figure 2, leur transposition par un spécialiste de la technique considérée ici ne présentant aucune difficulté particulière.

En variante, l'une des canalisations 29 et 117 peut, bien entendu, être supprimée.

En outre, les variantes envisagées pour l'installation représentée à la figure 1 peuvent être adaptées à l'installation représentée à la figure 2.

Par ailleurs, les unités 1 et 101 peuvent être de différentes sortes. Elles peuvent par exemple être configurées pour la mise en oeuvre soit d'un reformage du méthane à la vapeur du type simple (SMR), soit d'un reformage du méthane à la vapeur du type convectif (TCR).

En outre, d'autres sortes de générateurs de gaz de synthèse que les unités 1 et 101 de reformage du méthane à la vapeur peuvent être utilisées aux fins de produire le gaz de synthèse riche en hydrogène. Par exemple, il peut s'agir d'un réacteur chimique, conçu pour la mise en oeuvre d'une réaction catalytique ou non.

Egalement, les unités de purification 4 et 104 peuvent être conçues pour la mise en oeuvre de différentes sortes de procédés. Par exemple, elles peuvent être du type à adsorption sélective par variation cyclique de pression, ou bien être formées d'une boîte froide de séparation par voie cryogénique, ou encore utiliser le principe du lavage aux amines.

De même, la boîte froide 24 peut être remplacée par une unité de séparation d'un autre type, prévue pour extraire le monoxyde de carbone présent dans le gaz de synthèse autrement que par voie cryogénique. Par exemple, elle peut être remplacée par un dispositif à membrane sélective.

De plus, notamment lorsque le gaz de synthèse est produit au moyen d'un réacteur chimique, les brûleurs 6 peuvent équiper non pas l'unité de reformage 1 ou 101, le cas échéant remplacée par ce réacteur chimique, mais un autre dispositif tel qu'un four ou une chaudière de production de vapeur, cet autre dispositif pouvant par exemple faire partie d'une ligne de production autre que celle sur laquelle se trouve l'unité de purification 4 ou 104.

## Revendications

1. Procédé de conduite d'une installation pour produire au moins de l'hydrogène, dans lequel :
- dans une unité de purification (4 ; 104), on extrait l'hydrogène présent dans un gaz de synthèse acheminé via une première canalisation (5 ; 105) jusqu'à l'unité de purification (4 ; 104) et on récupère un gaz résiduaire,
- on stocke ce gaz résiduaire dans une capacité tampon (14) disposée sur une deuxième canalisation (9 ; 109) pour l'acheminement du gaz résiduaire depuis l'unité de purification (4 ;104) jusqu'à des brûleurs (6 ; 106), et
- on alimente lesdits brûleurs (6 ; 106) au moins avec le gaz résiduaire stocké dans la capacité-tampon (14),
ce procédé étant **caractérisé en ce que** suite à un arrêt intempestif de l'unité de purification (4 ; 104):
- on continue, au moins dans un premier temps, d'alimenter les brûleurs (6 ; 106) avec du gaz résiduaire en employant celui qui est stocké dans la capacité-tampon (14),
- on ouvre une première vanne de réglage de débit (18 ; 30 ; 118) progressivement, afin d'alimenter les brûleurs (6 ; 106) avec une quantité croissante de gaz de remplacement constitué par au moins une partie du gaz de synthèse, laquelle vanne de réglage est située sur une troisième canalisation (17 ; 29 ; 117)qui relie la première canalisation(5 ; 105) à la deuxième canalisation (9 ; 109).

2. Procédé selon la revendication 1, **caractérisé en ce qu'**une deuxième vanne de réglage de débit (15 ; 115) est prévue en aval de la capacité tampon (14), la troisième canalisation (17 ; 29 ; 117) se raccordant sur la deuxième canalisation (9 ; 109) en aval de cette deuxième vanne (15 ; 115), et **en ce que**:
- on ferme progressivement la deuxième vanne de réglage de débit (15 ; 115),
- on mesure de manière continue le débit du gaz résiduaire alimentant les brûleurs (6 ; 106),
- on calcule en temps réel et de manière continue le débit théorique de gaz de remplacement devant être brûlé pour compenser la baisse du débit du gaz résiduaire alimentant les brûleurs (6 ; 106), et
- on régule le débit effectif du gaz de remplacement alimentant les brûleurs (6 ; 106) autour dudit débit théorique calculé, en agissant sur le degré d'ouverture de la première vanne de réglage de débit (18 ; 30 ; 118).

## Patentansprüche

1. Verfahren zum Betreiben einer Installation zur Produktion von mindestens Wasserstoff, wobei man:
- in einer Reinigungseinheit (4; 104) den Wasserstoff, der in einem Synthesegas vorhanden ist, das über eine erste Leitung (5; 105) bis zur Reinigungseinheit (4; 104) geleitet wird extrahiert und ein Restgas auffängt,
- dieses Restgas in einem Pufferspeicher (14) lagert, der sich an einer zweiten Leitung (9; 109) befindet, um das Restgas von der Reinigungseinheit (4; 104) bis zu den Brennern (6; 106) zu leiten, und
- die Brenner (6; 106) mindestens mit dem im Pufferspeicher (14) gelagerten Restgas versorgt,
wobei dieses Verfahren **dadurch gekennzeichnet ist, dass** nach einem Stoppen der Reinigungseinheit (4; 104) zur Unzeit:
- die Brenner (6, 106), zumindest vorläufig, weiter mit Restgas versorgt werden, wozu das im Pufferspeicher (14) gelagerte Restgas verwendet wird,
- man ein erstes Durchflussregelventil (18; 30; 118) schrittweise öffnet, um die Brenner (6; 106) mit einer steigenden Menge Ersatzgas zu versorgen, das zumindest teilweise aus Synthesegas besteht, wobei das Regelventil sich an einer dritten Leitung (17; 29; 117) befindet, die die erste Leitung (5; 105) mit der zweiten Leitung (9; 109) verbindet.

2. Verfahren nach Anspruch 1, **dadurch gekennzeichnet, dass** ein zweites Durchflussregelventil (15; 115) nach dem Pufferspeicher (14) vorgesehen ist, wobei die dritte Leitung (17; 29; 117) nach diesem zweiten Ventil (15; 115) an die zweite Leitung (9; 109) angeschlossen wird und dadurch, dass man:
- das zweite Durchflussregelventil (15; 115) schrittweise schließt,
- den Durchfluss an Restgas zur Versorgung der Brenner (6; 106) ständig misst,
- in Echtzeit und ständig die theoretische Durchflussmenge an Ersatzgas misst, das verbrannt werden muss um die Verringerung der Durchflussmenge an Restgas zur Versorgung der Brenner (6; 106) auszugleichen, und
- die tatsächliche Durchflussmenge an Ersatzgas zur Versorgung der Brenner (6; 106) um die berechnete theoretische Durchflussmenge einstellt, indem man auf den Öffnungsgrad des ersten Durchflussregelventils (18; 30; 118) einwirkt.

## Claims

1. Method for operating an installation for producing at least hydrogen, wherein:
- in a purification unit (4; 104), the hydrogen present in a synthesis gas conveyed via a first pipe (5; 105) to the purification unit (4; 104) is extracted and a residue gas is recovered,
this residue gas is stored in a buffer capacity (14) arranged on a second pipe (9; 109) for the conveying of the residue gas from the purification unit (4; 104) to burners (6; 106), and
- said burners (6; 106) are supplied at least with the residue gas stored in the buffer capacity (14),
this method being **characterised in that** following an unintentional shutdown of the purification unit (4; 104):
the burners (6; 106) continue, at least in a first step, to be supplied with residue gas by using that which is stored in the buffer capacity (14),
- a first flow-control valve (18; 30; 118) is opened progressively, in order to supply the burners (6; 106) with an increasing quantity of replacement gas formed by at least one portion of the synthesis gas, said control valve is located on a third pipe (17; 29; 117) that connects the first pipe (5; 105) to the second pipe (9; 109).

2. Method according to claim 1, **characterised in that** a second flow-control valve (15; 115) is provided downstream from the buffer capacity (14), with the third pipe (17; 29; 117) being connected to the second pipe (9; 109) downstream from this second valve (15; 115), and **in that**:
- the second flow-control valve (15; 115) is closed progressively,
- the flow rate of the residue gas supplying the burners (6; 106) is continuously measured,
- the theoretical flow rate of the replacement gas that has to be burned in order to offset the drop in the flow rate of the residue gas supplying the burners (6; 106) is calculated in real time and continuously, and
- the effective flow rate of the replacement gas supplying the burners (6; 106) is adjusted around said calculated theoretical flow rate, by acting on the degree of opening of the first flow-control valve (18; 30; 118).
